# FASCICULE DE BREVET EUROPEEN

(11) **EP 2 513 696 B1**
(45) Date de publication et mention de la délivrance du brevet: **21.09.2016**
(21) Numéro de dépôt: 10805249.9
(22) Date de dépôt: 29.11.2010
(51) Int. Cl.: G02B 7/00, G01K 1/14, G01J 5/08, G01J 5/04

(54) **DISPOSITIF DE CONTROLE THERMIQUE**
TEMPERATURREGELUNGSVORRICHTUNG
TEMPERATURE CONTROL DEVICE

(30) Priorité: 18.12.2009 FR 0906184
(43) Date de publication de la demande: 24.10.2012
(73) Titulaire: Wintech, 64110 Uzos (FR)
(72) Inventeur: CROTTEREAU, Olivier, F-64290 Gan (FR); FERNANDEZ, José, F-64230 Artiguelouve (FR)
(74) Mandataire: Novagraaf Technologies
(86) Numéro de dépôt international: PCT/FR2010/000794
(87) Numéro de publication internationale: WO 2011/073541

(56) Documents cités:
- US-A- 5 463 222
- US-A1- 2003 169 518

## Description

### DOMAINE TECHNIQUE DE L'INVENTION

L'invention concerne un dispositif de contrôle thermique pour contrôler la température d'objets situés dans une zone délimitée par une paroi. Les documents US2003/0169518 et US5463222 divulguent de tels dispositifs.

L'invention concerne notamment le contrôle de température d'objets situés à l'intérieur d'une enceinte close.

### ÉTAT DE LA TECHNIQUE

Pour certaines applications, il est nécessaire de contrôler la température d'objets à travers une paroi. C'est notamment le cas des équipements électriques placés à l'intérieur d'une armoire et dont la température doit être contrôlée régulièrement afin de détecter des éventuels problèmes.

Les équipements électriques, et en particulier les équipements hautes et moyennes tensions peuvent être soumis à des arcs électriques plus ou moins intenses ayant pour conséquence des incendies voire des explosions. Il est par ailleurs établi qu'environ 40 % des incendies prennent naissance dans les installations électriques. Ainsi, pour des raisons évidentes de sécurité, il est indispensable de contrôler régulièrement et de manière fiable la température de ce type d'équipements.

Afin de prévenir efficacement ces risques, il est connu d'inspecter périodiquement par thermographie infrarouge les zones critiques des équipements électriques. Afin de permettre ces inspections périodiques, il est notamment connu de munir les parois externes des équipements électriques d'une ou de plusieurs fenêtres ou hublots de visée judicieusement placés.

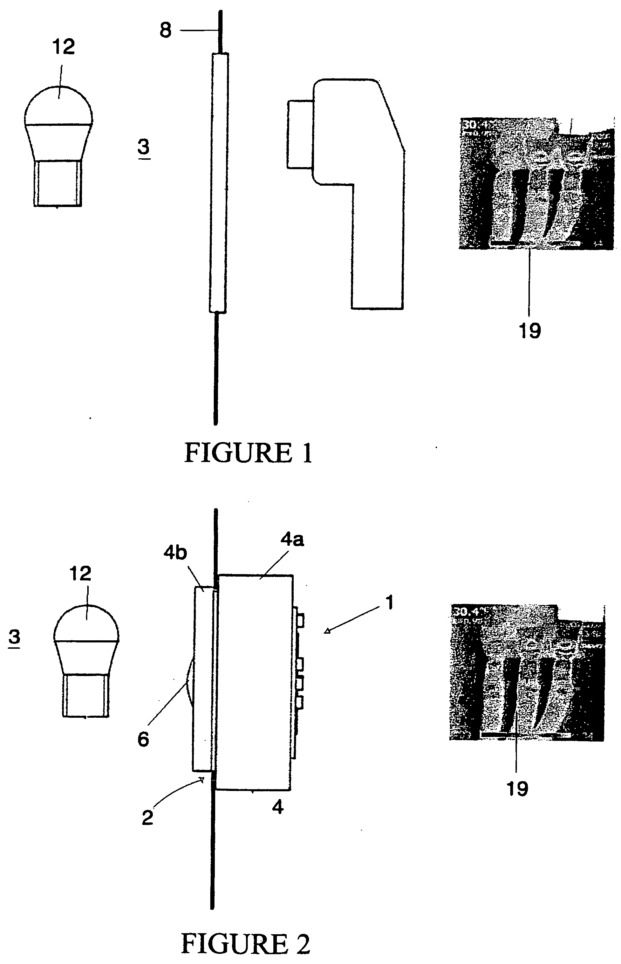

Ces fenêtres laissent passer les rayonnements infra rouges et permettent ainsi la visée des équipements électriques à contrôler au travers desdites fenêtres, par une caméra infrarouge. La figure 1 illustre cet état de la technique dans lequel l'armoire de logement de l'équipement électrique est pourvue d'une telle fenêtre et une caméra infrarouge est disposée en vis-à-vis de ladite fenêtre de visée de sorte à obtenir une image infrarouge de l'intérieur de l'armoire. De telles fenêtres sont notamment décrites dans le document FR 2 743 153. L'utilisation de tel hublot est particulièrement avantageuse. En effet, d'une part, l'utilisation d'un hublot de visée permet de s'affranchir d'opération de démontage des cloisons de l'armoire de logement de l'équipement électrique. D'autre part, le contrôle peut être effectué dans des conditions électriques normales, sans interruption de l'équipement électrique à contrôler, de sorte à obtenir un contrôle fiable en toute sécurité.

Toutefois, cette méthode de contrôle nécessite un opérateur qualifié et des opérations de disposition et de réglage de la caméra infrarouge de telle sorte que l'image infrarouge de l'équipement électrique n'est pas obtenue immédiatement. En outre, cette méthode ne permet pas de contrôler de manière permanente les températures des équipements électriques logés dans l'armoire.

### OBJET DE L'INVENTION

L'invention vise à remédier à ces problèmes en proposant un dispositif de contrôle thermique d'une zone délimitée par une paroi, permettant d'obtenir rapidement un contrôle thermique par thermographie infra rouge.

À cet effet, et selon un premier aspect, l'invention propose un dispositif de contrôle thermique selon la revendication 1.

Avantageusement, le dispositif comporte une optique logée dans le dit bâti et solidaire de celui-ci pour focaliser les ondes infra rouges provenant de la zone à contrôler vers ledit capteur thermique.

Ainsi, le dispositif de contrôle thermique peut être fixé en permanence sur la paroi de telle sorte que le contrôle par thermographie infrarouge peut être réalisé de manière quasiment immédiate sans nécessiter d'opération de réglage particulière lors de chaque contrôle. En particulier, la mise place et le réglage d'une caméra devient inutile puisque le capteur thermique est intégré dans le bâti d'encadrement qui lui-même est fixé dans la paroi. Le dispositif permet d'obtenir directement une image thermique sans recourir à une caméra séparée.

En outre, le dispositif étant fixé de manière permanente sur la paroi, il peut être en mesure de contrôler en continue la température des objets à l'intérieur de l'enceinte.

Enfin, ce dispositif de contrôle thermique ne nuit pas à l'étanchéité de la paroi de sorte que la pénétration de poussières, eau ou autres corps étrangers à l'intérieur de la zone à contrôler n'est pas permise au niveau de la paroi.

Avantageusement, l'optique forme une paroi avant du dispositif, destinée à être positionnée entre la paroi et la zone à contrôler. Ainsi, la proximité du système optique par rapport à la zone contrôlée permet de contrôler une zone beaucoup plus importante.

Dans un mode de réalisation, le dispositif comporte un disque de support, fixé de manière étanche au bâti, et présentant un orifice central de positionnement de l'optique. Ce disque de support forme avec l'optique une paroi avant du dispositif. Avantageusement, l'optique fait saillie vers l'avant par rapport au disque de support de sorte à obtenir un large champ de contrôle.

Dans un mode de réalisation avantageux, l'optique est une lentille grand angle.

Avantageusement, le dispositif comprend en outre une carte de traitement des signaux provenant du capteur thermique, logé dans le bâti. En outre, le dispositif comprend des moyens d'affichage d'une image infra rouge, logés dans le bâti et s'étendant en face arrière du dispositif. Ainsi, tous les éléments permettant le contrôle forme un ensemble unique qui peut être fixé lors d'une même opération de montage à la paroi.

Dans un mode de réalisation, le dispositif comporte un système d'alarme intégré, connecté à ladite carte de traitement et apte à générer un signal d'alarme permettant d'avertir d'une surchauffe dans la zone à contrôler.

Dans un mode de réalisation, le dispositif comporte un capot amovible de protection des moyens d'affichage agencé pour recouvrir la face arrière du dispositif.

Dans un mode de réalisation, le dispositif comporte un connecteur destiné à recevoir un connecteur d'alimentation électrique. Ainsi, le dispositif ne nécessite pas d'alimentation interne et peut facilement être connecté à une alimentation externe. Une alimentation par un système autonome à pile est également envisageable.

Dans un mode de réalisation, le dispositif comprend un port USB permettant un échange de données avec un ordinateur ou des périphériques extérieurs.

Dans un mode de réalisation, le dispositif comporte un bâti comprenant un corps principal et une bague filetée cylindrique destinée à être insérée dans ladite ouverture ; et un écrou destiné à être monté sur la bague filetée, de sorte à prendre en sandwich la paroi entre le corps principal du bâti et l'écrou. Ces moyens de fixation assurent un montage rapide et fiable du dispositif.

Avantageusement, le dispositif comporte un joint torique, monté sur la bague filetée entre la paroi et le corps principal du bâti de sorte à assurer l'étanchéité de la paroi au niveau de l'ouverture.

Le dispositif comporte en outre un joint plat autocollant monté sur ladite paroi et interposé entre la paroi et l'écrou.

Selon un deuxième aspect, l'invention concerne une enceinte comprenant une paroi présentant une ouverture et au moins un dispositif de contrôle thermique selon le premier aspect de l'invention, monté fixement dans ladite ouverture.

Enfin, selon un troisième aspect, l'invention concerne un procédé de montage d'un dispositif de contrôle thermique selon le premier aspect de l'invention, dans une ouverture d'une paroi délimitant une zone à contrôler, ledit procédé comportant une étape consistant à encastrer le bâti d'encadrement dans ladite ouverture et une étape de fixation du dispositif sur la paroi.

Avantageusement, l'on dispose le dispositif de contrôle thermique de telle sorte que l'optique fasse saillie vers la zone à contrôler.

### BRÈVE DESCRIPTION DES FIGURES

D'autres objets et avantages de l'invention apparaîtront au cours de la description qui suit, faite en référence aux dessins annexés, dans lesquels :
- la figure 1 est une vue schématique d'un ensemble de contrôle thermique selon l'art antérieur comportant un hublot de visée et une caméra infrarouge disposée en vis-à-vis dudit hublot de sorte à obtenir une image infrarouge de l'intérieur de l'enceinte à contrôler;
- la figure 2 est une vue schématique d'un dispositif de contrôle thermique selon l'invention ;
- la figure 3 est une vue éclatée en coupe d'un dispositif de contrôle thermique selon un mode de réalisation de l'invention ;
- la figure 4 est une vue éclatée en perspective avant d'un dispositif de contrôle thermique selon l'invention ;
- la figure 5 est une vue éclatée latérale d'un dispositif de contrôle thermique selon l'invention ; et
- la figure 6 est une vue éclatée en perspective arrière d'un dispositif de contrôle thermique selon l'invention ;
- la figure 7 est une vue en coupe illustrant de manière détaillée les moyens de fixation et les moyens d'étanchéité du dispositif selon un mode de réalisation de l'invention.

### EXEMPLE DE RÉALISATION

Le dispositif de contrôle thermique 1 selon l'invention est destiné à être fixé dans une ouverture 2 formée sur une paroi 8 délimitant une zone à contrôler. La paroi est par exemple celle d'une enceinte 3 à l'intérieur de laquelle sont logés des objets à contrôler. À titre d'exemple, l'enceinte à contrôler est une armoire électrique comportant des disjoncteurs, des fusibles, des transformateurs, des moteurs électriques et/ou des bancs capacitifs. Toutefois, l'invention ne se limite pas au contrôle thermique des équipements électriques et l'invention est également applicable pour le contrôle d'un procédé industriel (agroalimentaire par exemple) ou pour la surveillance de personnes (domaine médical ou carcéral), par exemple.

La paroi 8 est équipée d'une ouverture 2, généralement de profil circulaire, pour permettre l'installation du dispositif de contrôle 1 selon l'invention. Bien évidemment, l'implantation de l'ouverture 2 est déterminée en fonction de l'implantation des objets à observer à l'intérieur de l'enceinte 3. Sur la figure 2, l'objet dont la température doit être contrôlé est représenté par une ampoule 12.

Le dispositif 1 selon l'invention comporte un bâti d'encadrement 4 qui est destiné à venir s'encastrer dans l'ouverture 2 et à se fixer de manière étanche sur celle-ci. Pour ce faire, le bâti d'encadrement 4 est équipé de moyens de fixation sur ladite ouverture et de moyens d'étanchéité permettant d'assurer l'étanchéité de la paroi 8, entre l'intérieur et l'extérieur de l'enceinte 3, au niveau de ladite ouverture 2. Comme illustré sur les figures, le bâti d'encadrement 4 est réalisé d'une seule et même pièce.

Dans le mode de réalisation représenté, le bâti d'encadrement 4 comporte un corps principal 4a et, en partie avant, une bague filetée cylindrique 4b destinée à être insérée dans ladite ouverture 2. Le corps principal 4a comporte des dimensions supérieures à celle de la bague filetée 4b de telle sorte que le corps principal 4a vienne se plaquer contre la paroi 8 de l'enceinte 3 lorsque la bague filetée 4b est insérée dans ladite ouverture 2. Par ailleurs, afin de fixer le dispositif sur la paroi 8, un écrou 12 est monté sur la bague filetée 4b via l'intérieur de l'enceinte 3, lorsque la bague filetée est insérée dans l'ouverture 2.

On notera que la bague filetée 4b présente avantageusement un méplat permettant d'assurer l'alignement du dispositif. Bien évidemment dans ce cas, l'ouverture 2 présente une forme complémentaire à la forme de la bague filetée 4b.

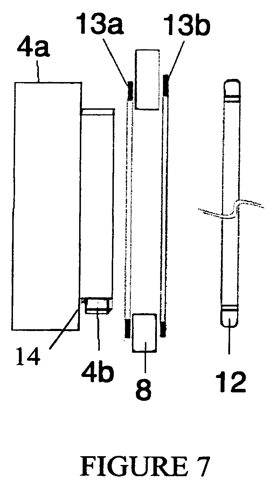

Par ailleurs, afin d'assurer l'étanchéité du montage, le dispositif comporte deux joints 13a, 13b, notamment représentés sur la figure 7. Le premier joint 13a est un joint torique 13a qui est interposé entre la face extérieure de la paroi 8 de l'enceinte 3 et une surface d'appui 14 du corps principal 4a. Par ailleurs, le second joint 13b est un joint plat autocollant fixé sur la face intérieure de la paroi 8 et interposé entre celle-ci et l'écrou 12. Avantageusement, les joints 13a, 13b utilisés sont en butadiène acrylo-nitrile ou tout autre matériau synthétique équivalent.

Grâce à ce montage étanche sur la paroi 8 de l'enceinte 3, le dispositif empêche la pénétration de poussières, eau ou autres corps étrangers à l'intérieur de l'enceinte 3. On pourra toutefois imaginer d'autres types de moyens de fixation et/ou d'étanchéité sans sortir du cadre de l'invention.

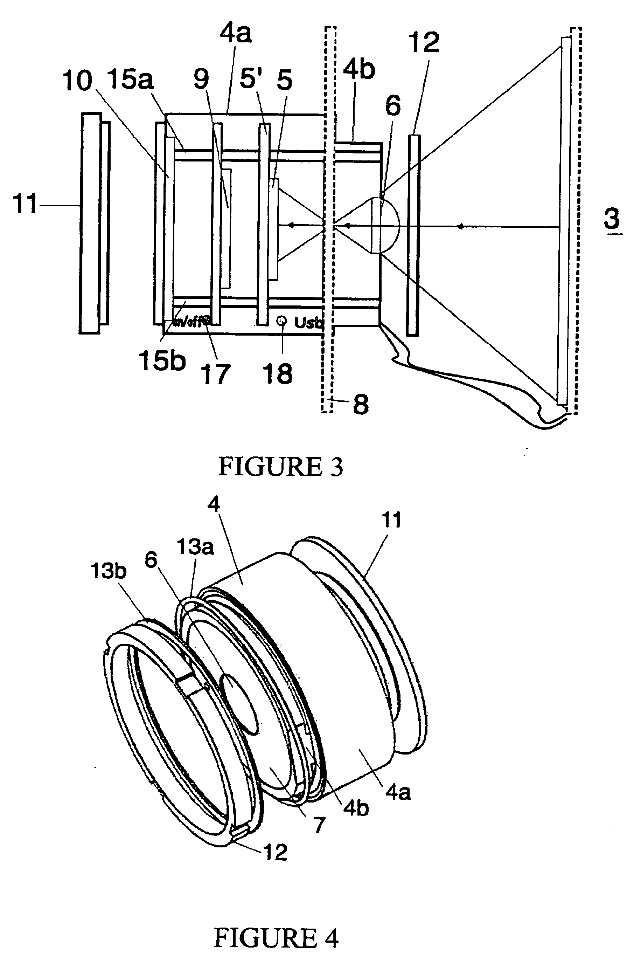

Par ailleurs, le dispositif 1 de contrôle thermique comporte une optique 6 et un capteur thermique 5, représentés sur la figure 3. L'optique 6 permet de focaliser les ondes infrarouges provenant de l'enceinte 3 vers le capteur thermique 5 qui reçoit lesdites ondes infrarouges et les convertit en signaux électriques. Ainsi, un seul et même bâti d'encadrement 4 permet de loger le capteur thermique 5, l'optique 6 et d'assurer la fixation étanche du dispositif 1 sur la paroi 8. Le bâti d'encadrement illustré est réalisé sous forme d'un boîtier, ici cylindrique, logeant l'ensemble des éléments permettant de délivrer les signaux électriques issus du capteur thermique.

L'optique 6 est logée dans le bâti 4 et est destinée être positionnée à l'intérieur de l'enceinte 3. Cette disposition de l'optique 6 à l'intérieur de l'enceinte 3 permet d'obtenir un angle de capture des ondes infrarouges plus important. De préférence, l'optique 6 est une lentille grand angle. L'angle de capture d'une telle optique est typiquement de l'ordre de 120 à 160°. L'optique 6 est transparente aux ondes infrarouges et typiquement transparente aux ondes dont la longueur d'onde est comprise entre 0,3 et 13 µm.

Dans le mode de réalisation représenté, le dispositif comporte un disque de support 7 présentant un orifice central dans lequel est positionnée l'optique 6. L'optique 6 est fixée de manière étanche audit disque de support 7 par un collage silicone ou par une bride de maintien avec joint d'étanchéité, non représentée. L'optique 6 fait saillie du disque de support 7 vers l'intérieur de l'enceinte 3. Le disque de support 7 est fixé de manière étanche sur le bâti d'encadrement 4. De même, le disque de support 7 peut être fixé sur le bâti 4 par collage silicone ou par une bride de maintien étanche. Le disque de support 7 forme avec l'optique 6, la paroi avant du dispositif 1.

Dans une réalisation particulière, l'optique 6 peut notamment être réalisée en Séléniure de Zinc ou en fluorure de Baryum par exemple. Selon l'invention, l'optique 6 est disposée à l'intérieur de l'enceinte 3 et est ainsi, en partie protégée des agressions extérieures telles que les poussières et l'eau. Ainsi, l'invention permet d'utiliser une large gamme de matériaux pour la fabrication de l'optique 6, et notamment des matériaux plus sensibles que les matériaux couramment utilisés pour des caméras mobiles par exemple.

Le capteur thermique 5 est logé à l'intérieur du bâti d'encadrement 4 et solidarisé à celui-ci. Le capteur thermique 5 est par exemple un photodétecteur infrarouge à puits quantiques non refroidi (détecteur QWIP), ou un détecteur microbolomètre non refroidi de nouvelle génération. Le capteur thermique 5 est monté sur une carte de support 5' convenablement centrée. La carte de support 5' présente par exemple des orifices coopérant avec des tiges de guidage 15a, 15b solidaires du bâti 4 afin d'assurer le centrage du capteur thermique 5. L'utilisation d'un capteur thermique non refroidi permet de miniaturiser le dispositif. En effet, l'utilisation d'un capteur thermique refroidi impose une source de réfrigération conséquente telle que de l'azote liquide ainsi qu'un boîtier spécifique pour loger le capteur thermique et son dispositif de refroidissement.

Le dispositif 1 comporte également une carte de traitement infrarouge 9, également logée dans le même bâti 4, et permettant d'acquérir et de traiter les signaux provenant du détecteur thermique 5 afin d'obtenir une image infrarouge 19 de l'intérieur de l'enceinte 3. Cette carte de traitement 9 est équipée de moyens d'acquisition, de conversion analogique numérique et d'une interface de sortie et de transmission de signaux vidéo. Cette carte de traitement 9 peut également comprendre des moyens de compression et une interface de sortie USB.

Avantageusement, la carte de traitement 9 comporte des moyens d'analyse des signaux permettant d'attribuer une température à chacun des points de l'image infrarouge. De manière avantageuse, le dispositif comporte en outre un système d'alarme intégré, connecté à ladite carte de traitement 9 et apte à générer un signal d'alarme permettant d'avertir les usagers d'une surchauffe d'un composant.

Par ailleurs, le dispositif 1 comporte en outre une mémoire permettant de stocker des informations relatives à l'installation à contrôler et/ou un historique des images infrarouges.

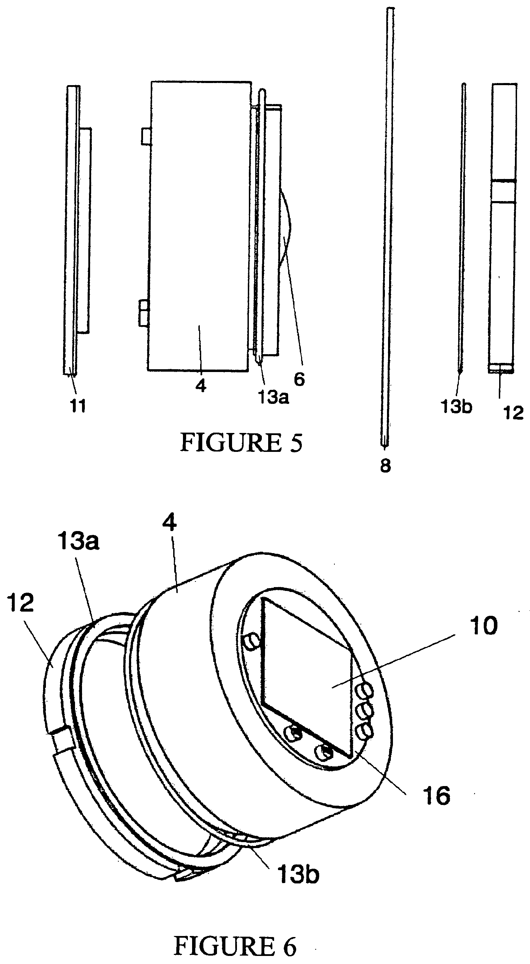

Le dispositif 1 de contrôle thermique est équipé de moyens d'affichage 10 d'une image infra rouge, représentés plus particulièrement sur les figures 5 et 6, connectés à une interface de sortie de la carte de traitement 9. Ces moyens permettent de visualiser directement l'image infrarouge 19 des équipements à observer. Les moyens d'affichage 10 sont également logés dans le bâti 4 et s'étendent en face arrière du dispositif. Dans le mode de réalisation représenté, le dispositif 1 comporte un disque 16 présentant un orifice de logement des moyens d'affichage et formant avec les moyens d'affichage 10 la face arrière du dispositif de contrôle. Les moyens d'affichages 10 sont par exemple constitués d'un écran LCD. Selon une réalisation de l'invention, le dispositif 1 comporte également en face arrière des touches de commande permettant par exemple de déplacer un pointeur sur l'écran afin d'obtenir la température de la zone pointée ou de naviguer dans des menus d'un logiciel d'exploitation du dispositif 1.

Avantageusement, afin de protéger les moyens d'affichage, le dispositif 1 comporte un capot 11 amovible, représenté sur la figure 3, agencé pour venir se positionner sur le bâti d'encadrement et recouvrir la face arrière du dispositif 1. Ce capot de protection 11 présente le même profil que le corps principal 4b du bâti et est fixé à celui-ci par vissage ou par aimantation par exemple.

Par ailleurs, le dispositif 1 comporte dans le mode de réalisation illustré un connecteur 17 destiné à recevoir un connecteur d'alimentation électrique. Le connecteur 17 est monté dans un orifice formé dans le bâti d'encadrement 4. Ainsi, le dispositif 1 selon l'invention ne comporte pas d'alimentation interne et peut être alimenté soit par une alimentation mobile soit par une alimentation logée dans l'enceinte 3 à contrôler.

Par ailleurs, dans un mode de réalisation particulier de l'invention, le dispositif est équipé d'un port USB 18 logé dans le bâti 4 et connecté à la carte de traitement 9. Ce port USB 18 permet de connecter le dispositif de contrôle à un ordinateur ou à des périphériques informatiques du type périphérique de stockage de données ou périphérique d'impression, de sorte à permettre un échange de données et notamment un échange d'image infrarouge.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Dispositif (1) de contrôle thermique destiné à être fixé de manière permanente dans une ouverture (2) d'une paroi (8) délimitant une zone à contrôler comprenant :
- un bâti (4) d'encadrement destiné à s'encastrer dans ladite ouverture (2), équipé de moyens de fixation sur ladite ouverture et de moyens d'étanchéité pour assurer la fixation du bâti sur la paroi (8) et l'étanchéité de la paroi (8) au niveau de l'ouverture (2);
- un capteur thermique (5) agencé pour recevoir des ondes infrarouges et les convertir en signaux électriques,
- une optique (6) logée dans le dit bâti (4) et solidaire de celui-ci pour focaliser les ondes infra rouges provenant de la zone à contrôler vers ledit capteur thermique (5),
le dit capteur thermique (5) et l'optique (6) sont logés dans le dit bâti (4) d'encadrement qui forme un seul et même bâti.

2. Dispositif (1) de contrôle thermique selon la revendication 1, **caractérisé en ce que** ladite optique (6) forme une paroi avant du dispositif, destinée à être positionnée entre la paroi (8) et la zone à contrôler à l'intérieur de la zone à contrôler.

3. Dispositif (1) de contrôle thermique selon la revendication 2, **caractérisé en ce qu'**il comporte un disque (7) de support, fixé de manière étanche au bâti (4), et présentant un orifice central de positionnement de l'optique (6).

4. Dispositif (1) de contrôle thermique selon la revendication 3, **caractérisé en ce que** l'optique (6) fait saillie vers l'avant par rapport au disque (7) de support.

5. Dispositif (1) de contrôle thermique selon l'une des revendications 1 à 4, **caractérisé en ce que** l'optique (6) est une lentille grand angle.

6. Dispositif (1) de contrôle thermique selon l'une quelconque des revendications 1 à 5, **caractérisé en ce qu'**il comprend en outre une carte de traitement (9) des signaux provenant du capteur thermique (5), logé dans le bâti (4).

7. Dispositif (1) de contrôle thermique selon la revendication 6, **caractérisé en ce qu'**il comporte un système d'alarme intégré, connecté à ladite carte de traitement (9) et apte à générer un signal d'alarme permettant d'avertir d'une surchauffe dans la zone à contrôler.

8. Dispositif (1) de contrôle thermique selon l'une quelconque des revendications 1 à 7, **caractérisé en ce qu'**il comprend des moyens d'affichage (10) d'une image infra rouge, logés dans le bâti (4) et s'étendant en face arrière du dispositif.

9. Dispositif (1) de contrôle thermique selon la revendication 8, **caractérisé en ce qu'**il comporte un capot (11) amovible de protection des moyens d'affichage (10) agencé pour recouvrir la face arrière du dispositif.

10. Dispositif (1) de contrôle thermique selon l'une quelconque des revendications 1 à 9, **caractérisé en ce qu'**il comporte un connecteur (17) destiné à recevoir un connecteur d'alimentation électrique.

11. Dispositif (1) de contrôle thermique selon l'une des revendications 1 à 10, **caractérisé en ce qu'**il comprend un port USB (18).

12. Dispositif (1) de contrôle thermique selon l'une quelconque des revendications 1 à 11, **caractérisé en ce que** le capteur thermique est un capteur non refroidi.

13. Dispositif (1) de contrôle thermique selon l'une des revendications 1 à 12, **caractérisé en ce qu'**il comporte un bâti (4) comprenant un corps principal (4a) et une bague filetée cylindrique (4b) destinée à être insérée dans ladite ouverture ; et un écrou (12) destiné à être monté sur la bague filetée (4b) de sorte à prendre en sandwich la paroi (8) entre le corps principal (4a) du bâti (4) et l'écrou (12).

14. Dispositif (1) de contrôle thermique selon la revendication 13, **caractérisé en ce qu'**il comporte un joint torique (13a), monté sur la bague filetée (4b) entre la paroi (8) et le corps principal (4a) du bâti (4) de sorte à assurer l'étanchéité de la paroi (8) au niveau de l'ouverture (2).

15. Dispositif de contrôle thermique selon la revendication 14, **caractérisé en ce qu'**il comporte un joint plat autocollant (13b) monté sur ladite paroi (8) et interposé entre la paroi (8) et l'écrou (12).

16. Enceinte comprenant une paroi (8) présentant une ouverture (2) et au moins un dispositif (1) de contrôle thermique selon l'une des revendications 1 à 15, monté fixement dans ladite ouverture (2).

17. Procédé de montage d'un dispositif (1) de contrôle thermique selon l'une des revendications 1 à 16 dans une ouverture (2) d'une paroi (8) délimitant une zone à contrôler, ledit procédé comportant une étape consistant à encastrer le bâti d'encadrement dans ladite ouverture et une étape de fixation du dispositif (1) sur la paroi (8).

18. Procédé de montage selon la revendication 17, **caractérisé en ce que** l'on dispose le dispositif (1) de contrôle thermique de telle sorte que l'optique (6) fasse saillie vers la zone à contrôler.

## Patentansprüche

1. Vorrichtung (1) zur Temperaturregelung, die in einer Öffnung (2) einer Wand (8), die eine zu regelnde Zone begrenzt, permanent befestigt werden soll, umfassend:
- ein Rahmengestell (4), das in die Öffnung (2) eingelassen werden soll, welches mit Befestigungsmitteln auf der Öffnung und mit Dichtungsmitteln zur Gewährleistung der Befestigung des Gestells an der Wand (8) und der Dichtigkeit der Wand (8) auf der Höhe der Öffnung (2) versehen ist;
- einen Temperatursensor (5), der angeordnet ist, um Infrarotwellen zu empfangen und sie in elektrische Signale umzuwandeln,
- eine Optik (6), die in dem Gestell (4) untergebracht und mit diesem fest verbunden ist, um die aus der zu regelnden Zone kommenden Infrarotwellen auf den Temperatursensor (5) zu fokussieren,
wobei der Temperatursensor (5) und die Optik (6) in dem Rahmengestell (4), das ein und dasselbe Gestell bildet, untergebracht sind.

2. Vorrichtung (1) zur Temperaturregelung nach Anspruch 1, **dadurch gekennzeichnet, dass** die Optik (6) eine Wand vor der Vorrichtung bildet, die zwischen der Wand (8) und der zu regelnden Zone innerhalb der zu regelnden Zone positioniert werden soll.

3. Vorrichtung (1) zur Temperaturregelung nach Anspruch 2, **dadurch gekennzeichnet, dass** sie eine Stützscheibe (7) aufweist, die dicht an dem Gestell (4) befestigt ist und eine zentrale Öffnung zur Positionierung der Optik (6) darstellt.

4. Vorrichtung (1) zur Temperaturregelung nach Anspruch 3, **dadurch gekennzeichnet, dass** die Optik (6) nach vorn gegenüber der Stützscheibe (7) hervorsteht.

5. Vorrichtung (1) zur Temperaturregelung nach einem der Ansprüche 1 bis 4, **dadurch gekennzeichnet, dass** die Optik (6) ein Weitwinkelobjektiv ist.

6. Vorrichtung (1) zur Temperaturregelung nach einem der Ansprüche 1 bis 5, **dadurch gekennzeichnet, dass** sie ferner eine Karte zur Verarbeitung (9) der Signale aufweist, die von dem in dem Gestell (4) untergebrachten Temperatursensor (5) stammen.

7. Vorrichtung (1) zur Temperaturregelung nach Anspruch 6, **dadurch gekennzeichnet, dass** sie ein integriertes Alarmsystem aufweist, das mit der Verarbeitungskarte (9) verbunden ist und ein Alarmsignal erzeugen kann, das bei einer Überhitzung in der zu regelnden Zone warnen kann.

8. Vorrichtung (1) zur Temperaturregelung nach einem der Ansprüche 1 bis 7, **dadurch gekennzeichnet, dass** sie Mittel zum Anzeigen (10) eines Infrarotbildes aufweist, welche in dem Gestell (4) untergebracht sind und sich auf der Rückseite der Vorrichtung erstrecken.

9. Vorrichtung (1) zur Temperaturregelung nach Anspruch 8, **dadurch gekennzeichnet, dass** sie eine abnehmbare Schutzabdeckung (11) für die Anzeigemittel (10) aufweist, die angeordnet ist, um die Rückseite der Vorrichtung zu bedecken.

10. Vorrichtung (1) zur Temperaturregelung nach einem der Ansprüche 1 bis 9, **dadurch gekennzeichnet, dass** sie eine Verbindung (17) aufweist, die einen Stromversorgungsstecker aufnehmen soll.

11. Vorrichtung (1) zur Temperaturregelung nach einem der Ansprüche 1 bis 10, **dadurch gekennzeichnet, dass** sie einen USB-Anschluss (18) aufweist.

12. Vorrichtung (1) zur Temperaturregelung nach einem der Ansprüche 1 bis 11, **dadurch gekennzeichnet, dass** der Temperatursensor ein ungekühlter Sensor ist.

13. Vorrichtung (1) zur Temperaturregelung nach einem der Ansprüche 1 bis 12, **dadurch gekennzeichnet, dass** sie ein Gestell (4) aufweist, das einen Hauptkörper (4a) und einen zylinderförmigen Gewindering (4b) aufweist, der in die Öffnung eingesetzt werden soll; und eine Mutter (12), die auf dem Gewindering (4b) montiert werden soll, um die Wand (8) zwischen dem Hauptkörper (4a) des Gestells (4) und der Mutter (12) sandwichartig aufzunehmen.

14. Vorrichtung (1) zur Temperaturregelung nach Anspruch 13, **dadurch gekennzeichnet, dass** sie einen O-Ring (13a) aufweist, der auf dem Gewindering (4b) zwischen der Wand (8) und dem Hauptkörper (4a) des Gestells (4) montiert ist, um die Dichtigkeit der Wand (8) auf der Höhe der Öffnung (2) zu gewährleisten.

15. Vorrichtung zur Temperaturregelung nach Anspruch 14, **dadurch gekennzeichnet, dass** sie eine selbstklebende Flachdichtung (13b) aufweist, die an der Wand (8) montiert ist und die zwischen der Wand (8) und der Mutter (12) eingesetzt ist.

16. Gehäuse, umfassend eine Wand (8), die eine Öffnung (2) und mindestens eine Vorrichtung (1) zur Temperaturregelung nach einem der Ansprüche 1 bis 15 aufweist, die fest in der Öffnung (2) montiert ist.

17. Verfahren zur Montage einer Vorrichtung (1) zur Temperaturregelung nach einem der Ansprüche 1 bis 16 in einer Öffnung (2) einer Wand (8), die eine zu regelnde Zone begrenzt, wobei das Verfahren einen Schritt, der darin besteht, das Rahmengestell in die Öffnung einzufügen, und einen Schritt der Befestigung der Vorrichtung (1) an der Wand (8) aufweist .

18. Montageverfahren nach Anspruch 17, **dadurch gekennzeichnet, dass** die Vorrichtung (1) zur Temperaturregelung so angeordnet wird, dass die Optik (6) zu der zu regelnden Zone hin hervorsteht.

## Claims

1. Temperature monitoring device (**1**) intended to be permanently attached inside an opening (**2**) of a wall (**8**) defining an area to be monitored comprising:
- a frame (**4**) intended to be fitted into said opening (**2**), provided with means for attachment onto said opening and with sealing means for attaching the frame on the wall (**8**) and ensuring that the wall (**8**) is sealed at the opening (**2**);
- a heat sensor (**5**) arranged so as to receive infrared waves and convert said waves into electrical signals; and
- an optical system (**6**) housed in said frame (**4**) and rigidly connected therewith for focussing the infrared waves, coming from the area to be monitored, towards said heat sensor (**5**),
said heat sensor (**5**) and the optical system (**6**) being housed in said frame (**4**) which forms the one and only frame.

2. Temperature monitoring device (**1**) according to Claim 1, **characterized in that** said optical system (**6**) forms a front wall of the device, intended to be positioned between the wall (**8**) and the area to be monitored, inside the area to be monitored.

3. Temperature monitoring device (**1**) according to Claim 2, **characterized in that** it comprises a support disk (**7**), attached in a sealed manner to the frame (**4**), and having a central orifice for positioning the optical system (**6**).

4. Temperature monitoring device (**1**) according to Claim 3, **characterized in that** the optical system (**6**) protrudes to the front with respect to the support disk (**7**).

5. Temperature monitoring device (**1**) according to one of Claims 1 to 4, **characterized in that** the optical system (**6**) is a wide-angle lens.

6. Temperature monitoring device (**1**) according to any one of Claims 1 to 5, **characterized in that** it further comprises a card (**9**) for processing the signals from the heat sensor (**5**), housed in the frame (**4**).

7. Temperature monitoring device (**1**) according to Claim 6, **characterized in that** it comprises an integrated alarm system, connected to said processing card (**9**) and suitable for generating an alarm signal for notifying overheating in the area to be monitored.

8. Temperature monitoring device (**1**) according to any one of Claims 1 to 7, **characterized in that** it comprises display means (**10**) for displaying an infrared image, housed in the frame (**4**) and extending to the rear face of the device.

9. Temperature monitoring device (**1**) according to Claim 8, **characterized in that** it comprises a removable protective cover (**11**) of the display means (**10**) arranged to cover the rear face of the device.

10. Temperature monitoring device (**1**) according to any one of Claims 1 to 9, **characterized in that** it comprises a connector (**17**) intended to receive an electrical power supply connector.

11. Temperature monitoring device (**1**) according to one of Claims 1 to 10, **characterized in that** it comprises a USB port (**18**).

12. Temperature monitoring device (**1**) according to any one of Claims 1 to 11, **characterized in that** the heat sensor is a non-cooled sensor.

13. Temperature monitoring device (**1**) according to one of Claims 1 to 12, **characterized in that** it comprises a frame (**4**) comprising a main body (**4***a*) and a cylindrical threaded ring (**4***b*) intended to be inserted into said opening; and a nut (**12**) intended to be mounted on the threaded ring (**4***b*), so as to place the wall (**8**) between the main body (**4***a*) of the frame (**4**) and the nut (**12**).

14. Temperature monitoring device (**1**) according to Claim 13, **characterized in that** it comprises an O-ring (**13***a*), mounted on the threaded ring (**4***b*) between the wall (**8**) and the main body (**4***a*) of the frame (**4**) so as to ensure the tightness of the wall (**8**) at the opening (**2**).

15. Temperature monitoring device according to Claim 14, **characterized in that** it comprises a self-adhesive flat seal (**13***b*) mounted on said wall (**8**) and inserted between the wall (**8**) and the nut (**12**).

16. Enclosure comprising a wall (**8**) having an opening (**2**) and at least one temperature monitoring device (**1**) according to one of Claims 1 to 15, fixedly mounted in said opening (**2**).

17. Method for mounting a temperature monitoring device (**1**) according to one of Claims 1 to 16 in an opening (**2**) of a wall (**8**) defining an area to be monitored, said method comprising a step consisting in fitting the frame inside said opening and a step of attaching the device (**1**) on the wall (**8**).

18. Mounting method according to Claim 17, **characterized in that** the temperature monitoring device (**1**) is arranged such that the optical system (**6**) protrudes towards the area to be monitored.
